# EUROPEAN PATENT APPLICATION

(11) **EP 2 583 773 A2**
(43) Date of publication of application: **24.04.2013**
(21) Application number: 12189076.8
(22) Date of filing: 18.10.2012
(51) Int. Cl.: B22F 3/105, B29C 67/00

(54) **Additive manufacturing process comprising relieving stresses of the manufactured workpiece**

(30) Priority: 21.10.2011 US 201161549883 P; 31.01.2012 US 201213362425
(71) Applicant: Pratt & Whitney Rocketdyne Inc., Canoga Park, CA 91309 (US)
(72) Inventor: Keremes, John J., Canoga Park, CA California 91309 (US); Haynes, Jeffrey D., Canoga Park, CA California 91309 (US); Gao, Youping, Canoga Park, CA California 91309 (US); Matejczyk, Daniel Edward, Canoga Park, CA California 91309 (US)
(74) Representative: Hull, James Edward

(57) **Abstract**

An additive manufacturing process performed by an additive manufacturing machine includes strain gauges (26) that detect stress within a part (16) during fabrication within a defined workspace (12). When the detected stress is exceeds a desired level the fabrication steps are paused and a stress relieving process is performed within the workspace (12) without moving the part (16). The additive manufacturing machine (10) includes heaters (30) and coolers (34) for changing the temperature within the workspace (12) to perform the desired stress relieving process in the same space as fabrication is performed. Once it is confirmed that stresses within the part (16) are within acceptable limits the part fabrication process is resumed.

## Description

### BACKGROUND

This disclosure generally relates to an additive manufacturing machine and process. More particularly, this disclosure relates to a configuration for relieving stress within a part during creation within the additive manufacturing assembly.

Typical manufacturing methods include various methods of removing material from a starting blank of material to form a desired completed part shape. Such methods utilize cutting tools to remove material to form holes, surfaces, overall shapes and more by subtracting material from the starting material. Such subtractive manufacturing methods impart physical limits on the final shape of a completed part. Additive manufacturing methods form desired part shapes by adding one layer at a time and therefore provide for the formation of part shapes and geometries that would not be feasible in part constructed utilizing traditional subtractive manufacturing methods.

Additive manufacturing utilizes a heat source such as a laser beam to melt layers of powdered metal to form the desired part configuration layer upon layer. The laser forms a melt pool in the powdered metal that solidifies. Another layer of powdered material is then spread over the formerly solidified part and melted to the previous melted layer to build a desired part geometry layer upon layer. Repeated localized heating by the laser beam coupled with relatively fast cooling across the surface of the part generates stresses in the part that can limit size and part configuration.

The stresses may be relieved through traditional heat-treating methods but require removal of the part from the additive manufacturing workspace.

### SUMMARY

An additive manufacturing process according to an exemplary embodiment of this disclosure, among other possible things includes detecting stress within a part during fabrication within a defined workspace, pausing fabrication steps responsive to a detected stress being within a predetermined range, performing a stress relieving process on the part within the same workspace in which fabrication is performed, and restarting part fabrication on the part within the defined work space once the stress relieving process is complete.

In a further embodiment of the foregoing additive manufacturing process including heating the part within the workspace to a temperature determined to relieve built in stresses.

In a further embodiment of any of the foregoing processes including a resistant heater surrounding the workspace for heating the part.

In a further embodiment of any of the foregoing processes including the step of monitoring stress within the part during the stress relieving process.

In a further embodiment of any of the foregoing processes including generating an atmosphere within the workspace and surrounding the part that prevents oxidation.

In a further embodiment of any of the foregoing processes including an atmosphere comprises an argon gas.

In a further embodiment of any of the foregoing processes including covering an energy directing device to prevent exposure to the workspace during the stress relieving process.

In a further embodiment of any of the foregoing processes including cooling the workspace to a temperature desired for performing fabrication of the part.

An additive manufacturing device according to an exemplary embodiment of this disclosure, among other possible things including a workspace defining an area for part fabrication, a powder application device for spreading a powder within the workspace, an energy transmitting device for generating a molten area of powder for forming a layer of a part, a sensor mounted within the workspace that detects stresses within a part during fabrication, and a stress relieving appliance supported proximate the workspace for relieving stress built up in the part during fabrication within the workspace.

In a further embodiment of the foregoing additive manufacturing device a resistance heater is disposed proximate the workspace for heating the workspace to a temperature determined to reduce stresses built up in the part.

In a further embodiment of any of the foregoing additive manufacturing devices the workspace includes walls and the resistant heater is supported within the walls of the workspace.

In a further embodiment of any of the foregoing additive manufacturing devices including a cover movable to a position blocking exposure of the energy-transmitting device to the workspace.

In a further embodiment of any of the foregoing additive manufacturing devices including an atmosphere within the workspace comprising an argon gas.

In a further embodiment of any of the foregoing additive manufacturing devices including a cooler for cooling the workspace after performance of a stress relief process.

In a further embodiment of any of the foregoing additive manufacturing device the sensor comprises a strain gauge mounted within a support holding the part during fabrication.

Although the different examples have the specific components shown in the illustrations, embodiments of this invention are not limited to those particular combinations. It is possible to use some of the components or features from one of the examples in combination with features or components from another one of the examples.

These and other features disclosed herein can be best understood from the following specification and drawings, the following of which is a brief description.

### BRIEF DESCRIPTION OF THE DRAWINGS

Figure 1 is a schematic representation of an example additive manufacturing machine during fabrication of a part.
Figure 2 is a schematic representation of the additive manufacturing machine during a stress relieving process.
Figure 3 is a schematic representation of the example additive manufacturing machine during a cooling process.
Figures 4 is a schematic representation of the example additive manufacturing machine during a measurement process to confirm dimensions of the part.

### DETAILED DESCRIPTION

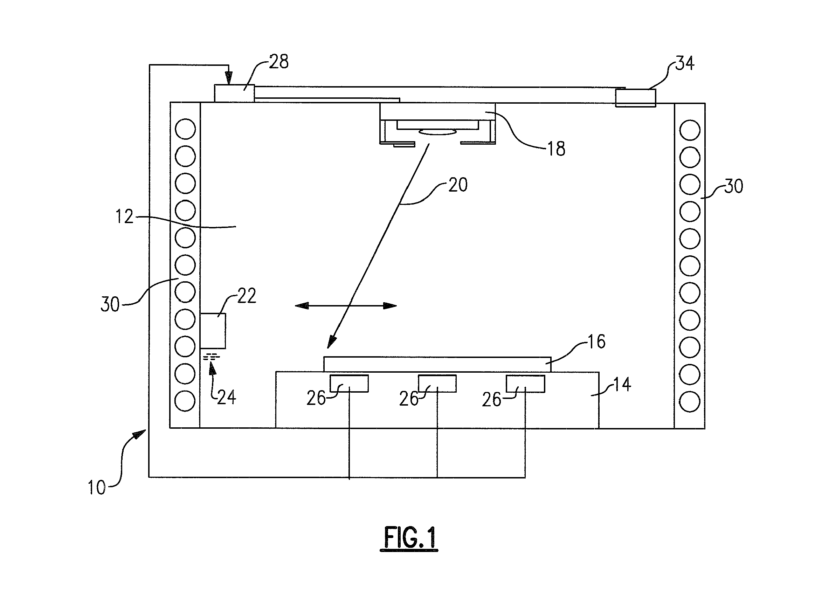

Referring to Figure 1, an additive manufacturing machine 10 includes a workspace or chamber 12 that supports an energy transmitting device 18 and a support 14 on which a part 16 is supported during fabrication. In this example, the energy transmitting device 18 emits a laser beam 20 that melts material 24 deposited by a material application device 22. The example material 24 is a metal powder that is applied in a layer over the support 14 and subsequent layers to produce a desired configuration of the part 16. The laser beam 20 emits directs energy that melts the powder material in a configuration that forms the desired part dimensions.

The additive manufacturing process utilizes material 24 that is applied in layers on top of the support 14. Selective portions of the layers are subsequently melted by the energy emitted from the laser beam 20. The additive manufacturing process proceeds by melting subsequent layers of powdered material 24 that are applied to the part 16 to form the desired part configuration. As appreciated, the energy focused on the top layer of the part 16 generates the desired heat to melt and then solidify portions of the powdered metal to form the desired part configuration. The repeated localized heating and cooling of the powdered material 24 and the part 16 can result in the buildup of undesired stresses within the part 16. Stresses within the part 16 may result in undesired cracking or weaknesses within the completed part and therefore are to be avoided.

The example additive manufacturing machine 10 includes a plurality of sensors 26 that are disposed within the support 14. In this example, the sensors 26 are strain gauges that measure stress built up within the part 16. During operating and fabrication of the part 16, the strain gauges 26 transmit information to a controller 28 that are indicative of the condition and specifically the stress condition of the part 16. The stress measurements that are provided by the strain gauges 26 are ongoing during the entire fabrication of the part 16. The ongoing measurement of the stress within the part 16 provides for the detection of undesired rises in stress levels in the part 16.

The example additive manufacturing machine 10 further includes heating elements 30 for heating the chamber 12 and a cooler 34 for quickly cooling the workspace 12. The heating elements 30 and cooler 34 provide for the implementation of a stress relieving heat treat process.

In response to the controller 28 receiving signals from the strain gauges 26 of a stress built up within the part 16 that are above the desired stress level, the fabrication process can be paused to allow for a stress relieving process to be performed on the part 16.

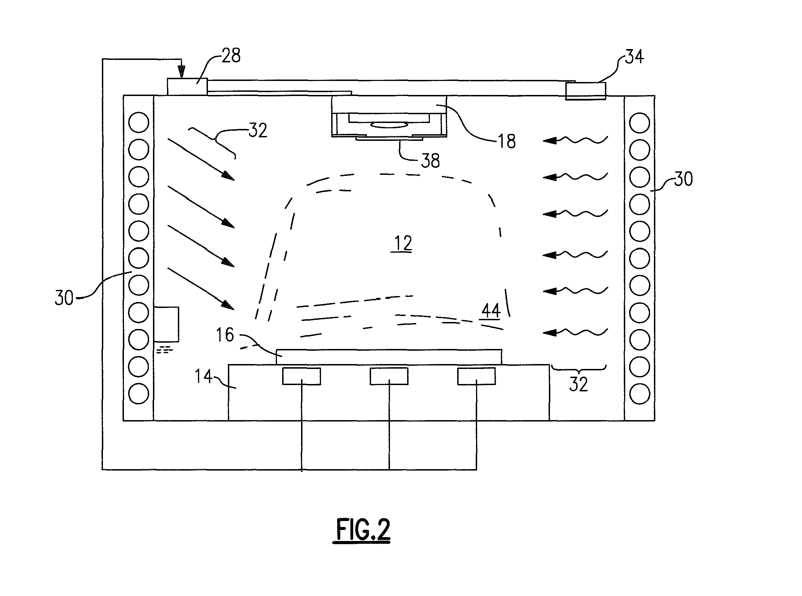

Referring to Figure 2, in response to a detected stress within the part 16 during fabrication, the fabrication process is paused and the chamber 12 is readied for a stress relieving process. In this example, the stress relieving process includes a heat treat process where the part 16 is heated then cooled according to a predetermined temperature and period.

As is appreciated, the heat treat process utilizes heat to transform material within the part into a more consistent composition. Many heat treatment processes are known and one such process includes the heating of a part to a level to which the material will control the heating and cooling of the part to control the rate of fusion and the rate of the cooling within the microstructure of the material comprising the part 16. As appreciated, many known heat treating processes may be utilized within the chamber 12 to provide desired properties in the completed part 16. The example heat treating process includes heating of the part 16 in an inert atmosphere within the same chamber 12 in which part fabrication occurs. Moreover, the example heat process includes heating the chamber 12 to a specific temperature and then cooling the part as is desired within a given period.

In this example, the chamber 12 includes the electric resistant heaters 30 embedded in the walls of the chamber 12 and a cooler 34 mounted to provide cooling air into the chamber 12. Alternatively, inductive heaters and other heat sources may be utilized. Before the heat treatment process is begun, the chamber 12 is filled with an inert gas. In this example, Argon gas 44 is utilized to surround the part 16. A cover 38 is moved to a closed position to protect the energy transmitting device 18 from the heat and environment within the chamber 12 during the heat treat process. The heat treat process then begins by heating the chamber 12, and thereby the part through the use of the electric resistant heaters 30 to generate heat as indicated by arrow 32.

A feature of the example process provides for maintaining the part 16 on the support 14 in the same location as it sits during fabrication. Accordingly, the part 16 remains in place during the heat treatment process such that fabrication is paused only briefly and the part 16 does not need to be removed from its location within the chamber 12. In this example, the part 16 is heated to a temperature determined to relieve stresses within the part 16. At all times during the heat treatment process the strain gauges 26 measure stresses within the part 16 and communicate that information to the controller 28. The controller 28 processes this information and continues with the heat treatment process as it monitors the stresses within the part 16. The controller 28 may utilize the stress information obtained from the strain gauges 26 to govern operation of the heat treatment process.

The controller 28 may also implement a heat treatment routine that is defined to heat the part 16 to a desired temperature to cool that part as part of a predefined stress relieving heat treatment process. In each of the instances, the controller 28 may utilize information obtained from the strain gauges 26.

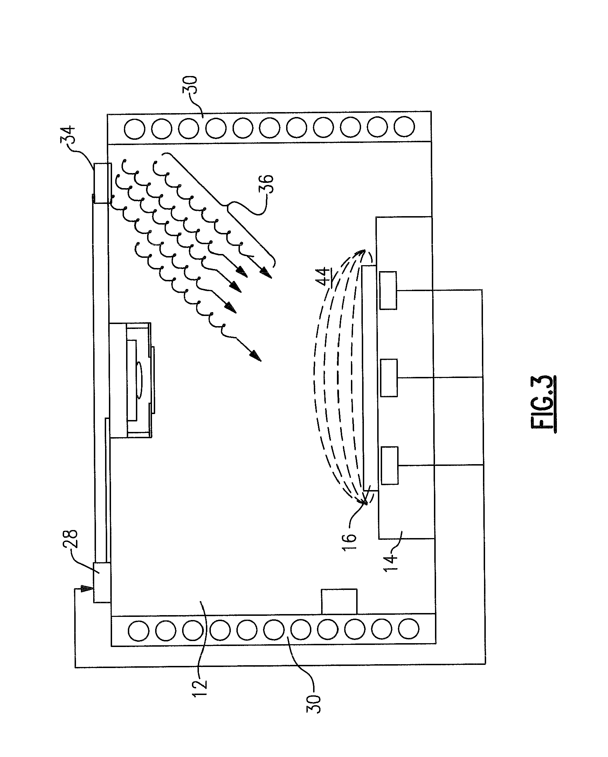

Referring to Figure 3, once the part 16 has been heated to a sufficient temperature to provide the desired stress relief, the part 16 is cooled by a cooler 34 that drives cooling air 36 into the chamber 12 to thereby cool the part 16 to a desired temperature required to provide the desired stress relieving function. It should be noted that in all instances, the part 16 remains on the support 14 in the same position in which fabrication had begun. By maintaining the part 16 within the chamber 12, the specific position is maintained and a secondary set up process is not required. Moreover, overall part fabrication cycle time is reduced.

Upon completion of the cooling operation, strain and stresses within the part 16 are measured by the strain gauges 26 that remain within the chamber 12 and continually provide information indicative of stresses within the part 16 to the controller 28. The gauges 26 will indicate that strains and stresses within the part 16 are now within a desired range and fabrication can be restarted. However, if the strain gauges 26 continue to read stress within the part 16 above a desired limit the heat treatment process can be repeated or alternatively, other measures can be instituted to relieve stresses within the part 16.

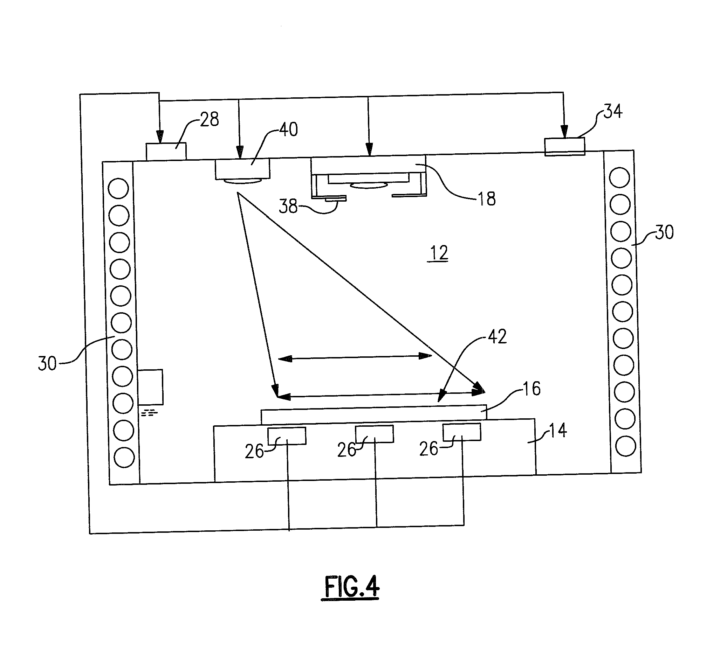

Referring to Figure 4, upon an indication that stresses within the part 16 are now within acceptable ranges a measurement can be made by a measurement device 40 supported within the chamber 12. This measurement can confirm the parts surface 42 parameters are within those desired for a return to fabrication for the part. The measurement operation can utilize any gauge or system known to provide an indication of the specific part parameters that would be of interest to confirm that re fabrication of the part may begin. In this example, the gauge 40 measures the surface 42. Upon confirmation that the surface 42 is within the desired range and includes desired attributes, the fabrication process can be restarted on the now stress relieved part 16. The example stress relieving process can then be repeated as is necessary the fabrication process to prevent excess stress build up within a part.

Accordingly, the disclosed advanced manufacturing machine and process of stress relieving a part during fabrication provides for a completed part to be fabricated in a reduced time without removal from the process and fabrication chamber 12.

Although an example embodiment has been disclosed, a worker of ordinary skill in this art would recognize that certain modifications would come within the scope of this disclosure. For that reason, the following claims should be studied to determine the scope and content of this invention.

## Claims

1. An additive manufacturing process comprising:
detecting stress within a part (16) during fabrication within a defined workspace (12);
pausing fabrication steps responsive to a detected stress being within a predetermined range;
performing a stress relieving process on the part (16) within the same workspace (12) in which fabrication is performed; and
restarting part fabrication on the part (16) within the defined work space (12) once the stress relieving process is complete.

2. The additive manufacturing process as recited in claim 1, including heating the part (16) within the workspace (12) to a temperature determined to relieve built in stresses.

3. The additive manufacturing process as recited in claim 1 or 2, including a resistant heater (30) surrounding the workspace (12) for heating the part (16).

4. The additive manufacturing process as recited in any of claims 1 to 3, including the step of monitoring stress within the part (16) during the stress relieving process.

5. The additive manufacturing process as recited in any preceding claim, including generating an atmosphere within the workspace (12) and surrounding the part (16) that prevents oxidation.

6. The additive manufacturing process as recited in claim 5, wherein the atmosphere comprises an argon gas.

7. The additive manufacturing process as recited in any preceding claim, including covering an energy directing device (18) to prevent exposure to the workspace (12) during the stress relieving process.

8. The additive manufacturing process as recited in any preceding claim, including cooling the workspace (12) to a temperature desired for performing fabrication of the part (16).

9. An additive manufacturing device (10) comprising:
a workspace (12) defining an area for part fabrication;
a powder application device (22) for spreading a powder (24) within the workspace (12);
an energy transmitting device (18) for generating a molten area of powder (24) for forming a layer of a part (16);
a sensor (26) mounted within the workspace (12) that detects stresses within a part (16) during fabrication; and
a stress relieving appliance supported proximate the workspace for relieving stress built up in the part during fabrication within the workspace (12).

10. The additive manufacturing device (10) as recited in claim 9, comprising a resistance heater (30) disposed proximate the workspace (12) for heating the workspace (12) to a temperature determined to reduce stresses built up in the part (16).

11. The additive manufacturing device (10) as recited in claim 10, wherein the workspace (12) includes walls and the resistant heater (30) is supported within the walls of the workspace (12).

12. The additive manufacturing device (10) as recited in any of claims 9 to 11, including a cover (38) movable to a position blocking exposure of the energy-transmitting device (18) to the workspace (12).

13. The additive manufacturing device (10) as recited in any of claims 9 to 12, including an atmosphere within the workspace (12) comprising an argon gas.

14. The additive manufacturing device (10) as recited in any of claims 9 to 13, including a cooler (34) for cooling the workspace (12) after performance of a stress relief process.

15. The additive manufacturing device as recited in any of claims 9 to 14, wherein the sensor (26) comprises a strain gauge mounted within a support holding the part (16) during fabrication.
